# EUROPEAN PATENT APPLICATION

(11) **EP 1 097 982 A1**
(43) Date of publication of application: **09.05.2001**
(21) Application number: 00309769.8
(22) Date of filing: 03.11.2000
(51) Int. Cl.: C09K 19/34, C09K 19/32, C09K 19/00

(54) **Process for producing crystalline film**

(30) Priority: 04.11.1999 JP 31363899
(71) Applicant: CANON KABUSHIKI KAISHA, Tokyo (JP)
(72) Inventor: Hanyu, Yujio, Ohta-ku, Tokyo (JP); Mizutani, Hidemasa,, Ohta-ku, Tokyo (JP)
(74) Representative: Beresford, Keith Denis Lewis

(57) **Abstract**

An organic crystalline film of a high molecular alignment order can be conveniently formed by using an organic compound having an isotropic phase or nematic phase directly above its crystal phase on temperature increase. A layer of the organic compound is heated to a temperature close to a critical temperature for phase transition from crystal to the isotropic or nematic phase to leave at least one crystal nucleus and place a surrounding region in the isotropic or nematic phase, and then cooled to cause crystal growth of the organic compound from the crystal nucleus as a seed crystal.

## Description

### FIELD OF THE INVENTION AND RELATED ART

The present invention relates to a process for producing a crystalline film, particularly a process for producing a crystalline film with an increased order in the crystal phase.

A molecular crystal can be expected as a useful device material, such as a superconducting material, an effective photoconductor or a gas sensor, because of its electronic and geometrical structure and packing state. As the process for production thereof, growth in a solution and growth in a molten state have been generally practiced. According to any of such processes, however, it is difficult to obtain a thin film of single crystal, and this poses an obstacle against using it as a functional layer in devices. As another process, there is known a gas phase deposition process, by which, however, it is difficult to prepare a uniform film due to affection by the gas phase deposition boundary.

On the other hand, it has been reported to improve the carrier transportation performance by utilizing a molecular alignment in a higher-order liquid crystal phase of SmB or SmE ("Ohyou Butsuri (Applied Physics)", Vol. 68, No. 1, pp. 26 - 32 (1999)). In this report, a higher speed transportation of electrons and holes has been aimed at by utilization of alignment order in a higher-order liquid crystal phase. The improvement in high-speed transportation performance of flow paths for electrons and holes due to regular packing of aromatic rings in the higher-order smectic phase alignment. This performance has been also noted as a carrier transportation layer in EL devices, and a further improvement is expected. For this purpose, it is desirable to obtain a crystalline film having a crystal state which is defect-free (i.e., free from or accompanied with only very few carrier traps) uniformly over a wide area.

### SUMMARY OF THE INVENTION

In view of the above-mentioned circumstances, a principal object of the present invention is to provide a simple process for producing a molecular single-crystalline film which can be incorporated in functional devices.

According to the present invention, there is provided a process for producing a crystalline film, comprising the steps of:
heating an organic compound in a layer to a vicinity of a critical temperature Tc for phase transition from crystal to isotropic or nematic phase to leave at least one crystal nucleus and place a surrounding region in the isotropic or nematic phase, and
cooling the layer of the organic compound to cause crystal growth of the organic compound from the crystal nucleus as a seed crystal.

The crystal growth may preferably be effected while placing the layer of the organic compound between a pair of substrates. The organic compound may comprise a bar-shaped or a disk-shaped molecular structure.

According to the present invention, it is possible to conveniently form a single-crystalline film by utilizing the alignment characteristic of the organic compound, particularly a liquid crystal compound. The resultant film can be uniform over a wide area with very few defects, if any.

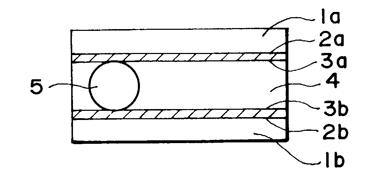

These and other objects, features and advantages of the present invention will become more apparent upon a consideration of the following description of the preferred embodiments of the present invention taken in conjunction with the accompanying drawing.

### BRIEF DESCRIPTION OF THE DRAWING

The sole figure in the drawing is a schematic thicknesswise sectional view illustrating a basic structure of a cell used for formation therein of a single-crystalline film according to the invention.

### DESCRIPTION OF THE PREFERRED EMBODIMENTS

In the process for producing a crystalline film according to the present invention, an organic compound is heated in a layer to a vicinity of a critical temperature Tc for phase transition from crystal to isotropic or nematic phase to leave at least one crystal nucleus and place a surrounding region in the isotropic or nematic phase, and then the layer of the organic compound is cooled to cause crystal growth of the organic compound from the crystal nucleus as a seed crystal.

The crystal growth of the organic compound may preferably be performed between a pair of substrates, thereby improving the molecular alignment order in the crystal phase.

Hereinbelow, the present invention will be described with reference to the drawings.

The sole figure is a schematic thicknesswise sectional view of a cell structure suitably used for practicing an embodiment of the process according to the present invention, by which a liquid crystal compound as a preferred embodiment of the organic compound can be aligned in a controlled manner. Referring to the sole figure, the cell structure includes a pair of glass substrates 1a and 1b having thereon transparent electrodes 2a and 2b, respectively, of In₂O₃, ITO (indium tin oxide), etc., and, e.g., 50 to 1000 Å-thick alignment control films 3a and 3b, respectively, and a layer 4 of an organic compound, preferably a liquid crystal compound, is disposed between the alignment control films 3a and 3b in a controlled thickness determined by a spacer 5. The alignment control films need not be provided in the case where a uniaxial alignment of the organic compound 4 is not required. On the other hand, the alignment control films 3a and 3b, when disposed, preferably exhibit electroconductivity at their boundary with the organic compound layer 4.

As mentioned before, the formation of an organic compound crystal in a thin film is a critical factor for the organic compound crystal to be used as a component of a device. In a preferred embodiment of the present invention, such a crystalline film of organic compound is formed by cooling a layer of an organic compound that causes a phase transition directly from crystal to an isotropic or nematic phase on temperature increase to a crystallization temperature, then heating the organic compound layer to a vicinity of the critical temperature Tc for phase transition from crystal to isotropic or nematic phase to leave one or plural crystal nuclei and place a surrounding region in the isotropic or nematic phase, and then cooling the layer of the organic compound to cause crystal growth of the organic compound from the one or plural crystal nuclei as seed crystals.

In other words, in the process of the present invention, a non-uniform crystal state of an organic compound once formed by ordinary cooling process into a crystal state is heated to a vicinity of a critical temperature (transition temperature) of crystal → nematic phase of crystal → isotropic phase on temperature increase to selectively leave a crystal state of higher order as a nucleus, and then the nucleus is used as a seed crystal for a subsequent crystal growth on gradual temperature decrease to form a high-order crystal state over a wide area.

The organic compound used as a material for providing an organic crystalline film according to the present invention may include the following materials, which are however not exhaustive.

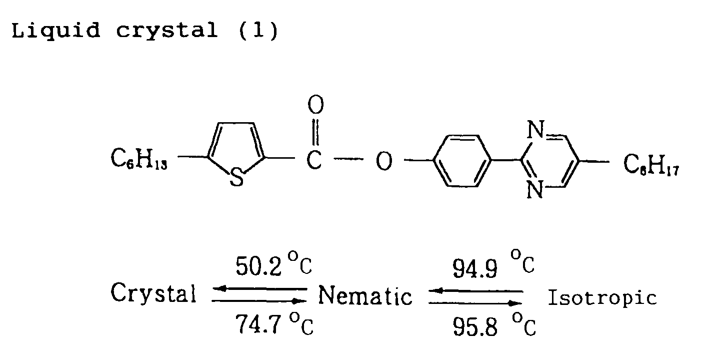

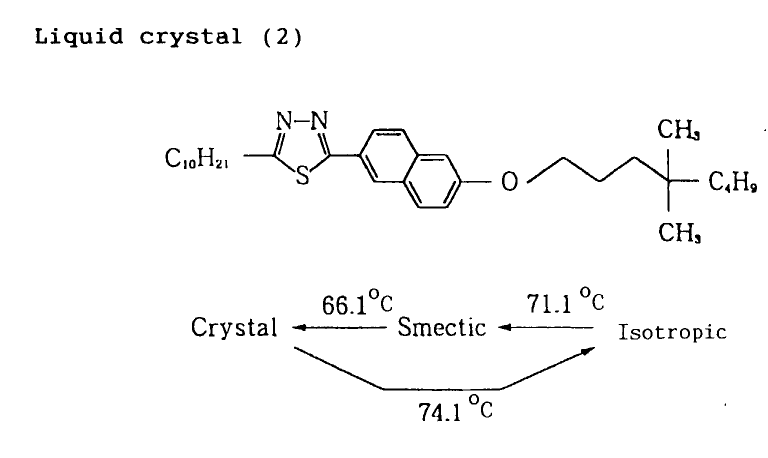

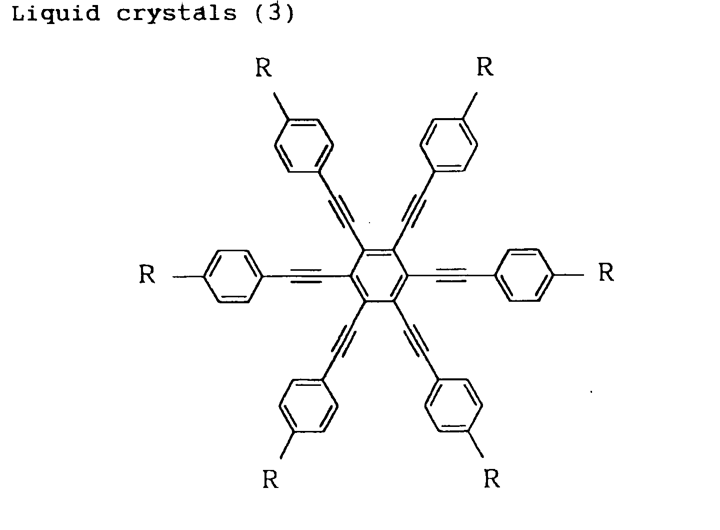

Liquid crystals (3) represented by the above formula show different phase transition temperatures depending on different groups R in the formula as shown in the following Table 1.

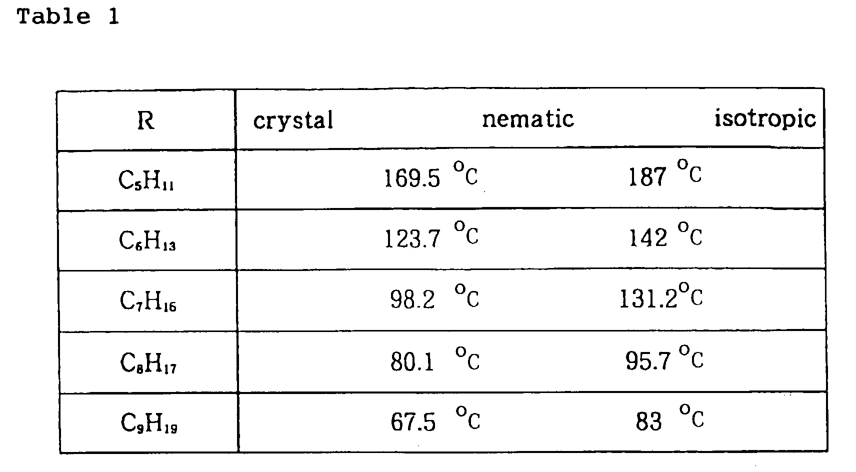

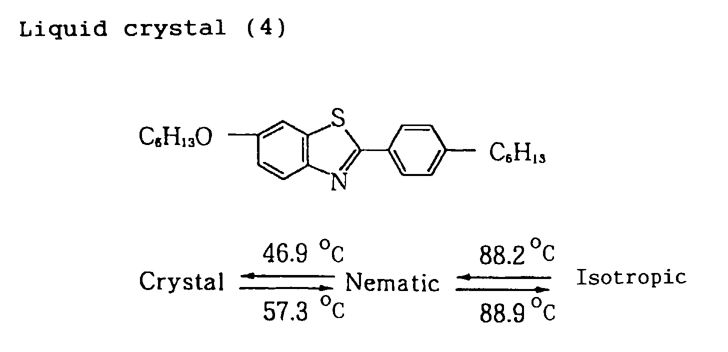

In a preferred embodiment of the present invention, a nematic liquid crystal having nematic phase directly above crystal phase on temperature increase is heated to a vicinity of a critical temperature Tc for phase transition from crystal to the nematic phase to leave a crystal nucleus in the surrounding region of nematic phase. In this instance, it is assumed that a minute region of single crystal in the non-uniform crystal before the heating remains as a nucleus, and the single crystal is caused to grow in a subsequent gradual cooling step to provide a high-order crystal state over a wide area.

Herein, the "critical temperature Tc for phase transition from crystal to isotropic phase or nematic phase" means a temperature at which the crystal nucleus (or nuclei) completely disappears in the course of temperature increase, and the "proximity to the critical temperature Tc" means as high a temperature as possible below the critical temperature Tc. The temperature difference below Tc is preferably less than 1 °C, more preferably less than 0.5 °C, further preferably less than 0.2 °C. In the present invention, it is important that the organic compound is heated to the proximity of the critical temperature Tc so as to leave as small an amount and as small a size as possible of crystal nucleus, and then the mixture state containing the crystal nucleus is gradually cooled to cause crystal growth from the nucleus. For the gradual cooling, a slower speed is basically preferred, e.g., 0.05 - 1 °C/min.

According to the process of the invention, the crystalline film may be formed in a controlled thickness suitable for a device incorporating the film, which may generally be in the range of 5 - 5000 nm, preferably 5 - 1000 nm, more preferably 10 - 200 nm.

The crystalline film formed by the present invention may be applicable to, e.g., devices, such as organic TFTs (thin film transistors), organic electroluminescence devices, and temperature sensors, and may be advantageously applicable to particularly organic TFTs in utilization of a high carrier transferability (mobility).

More specifically, the crystalline film formed according to the present invention is expected to show a carrier mobility of, e.g., 10 cm²/V.s or higher, which is higher than that of amorphous silicon semiconductor on the order of 10⁻¹ to 1 cm²/V.s and comparable to or higher than that of polysilicon semiconductor.

### [Example]

### Example 1

A glass substrate was coated with a 700 Å-thick transparent conductor film of ITO and further coated with a solution of Polyamic acid (1) of a formula shown below in NMP (N-methylpyrrolidone), followed by baking at 200 °C to form a 200 Å-thick alignment film of Polyimide (2) of a formula shown below. Two glass plates each processed in the above-described manner were applied to each other via 2.4 µm-dia. spacer beads disposed therebetween to form a blank cell having a cell gap of 2.0 µm.

The cell was then filled with Liquid crystal (1) shown below heated in nematic phase (94.9 °C), and the resultant cell was cooled to room temperature at a rate of 1 °C/min. At a crystal phase temperature (30 °C), a crystal state of non-aligned crystal growth directions was obtained. The non-uniform crystal layer was heated up to 74.5 °C whereby crystal nuclei of 1 to 20 µm in diameter were allowed to remain at a density of 3 - 5 nuclei in a spot region of 500 µm in diameter in the surrounding nematic phase.
Thereafter, the layer of Liquid crystal (1) was gradually cooled at a rate of 0.1 °C/min. to cause a crystal growth from the crystal nuclei as seed crystals, to form an organic crystalline film in a wide area of 1 - 3 mm² in a single crystal state. The crystallinity of the organic crystalline film was confirmed by observation through a polarizing microscope.

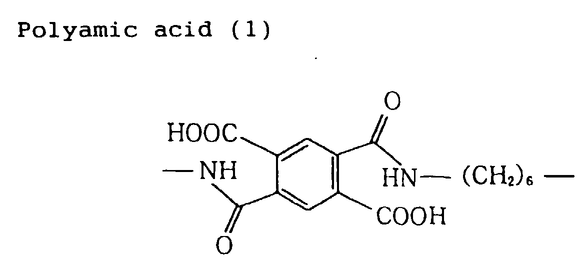

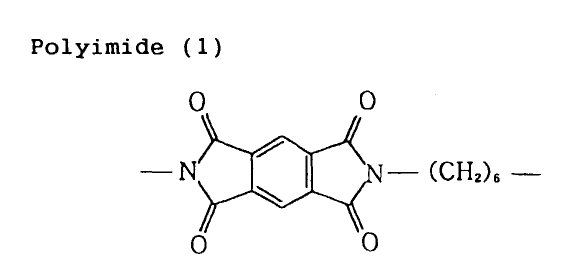

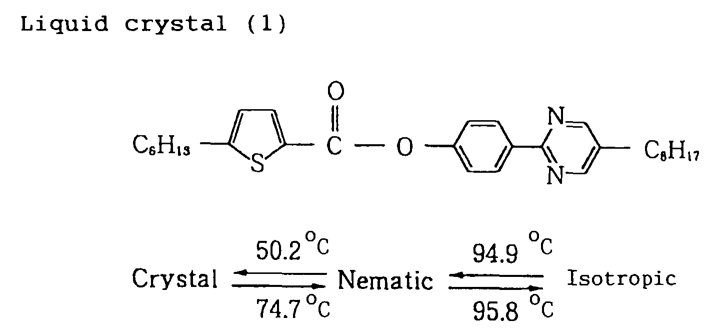

### Example 2

A blank cell was prepared in the same manner as in Example 1 and was filled with Liquid crystal (2) shown below, followed by cooling at a rate of 1 °C/min. to room temperature. At a crystal phase temperature (50 °C), a crystal state of non-aligned crystal growth directions was obtained. The non-uniform crystal layer was heated up to 74.1 °C whereby crystal nuclei were allowed to remain in isotropic phase. Thereafter, the layer of Liquid crystal (2) was gradually cooled to 30 °C at a rate of 0.1 °C/min. to cause a crystal growth from the crystal nuclei as seed crystals, to form a uniform organic crystalline film over a wide area.

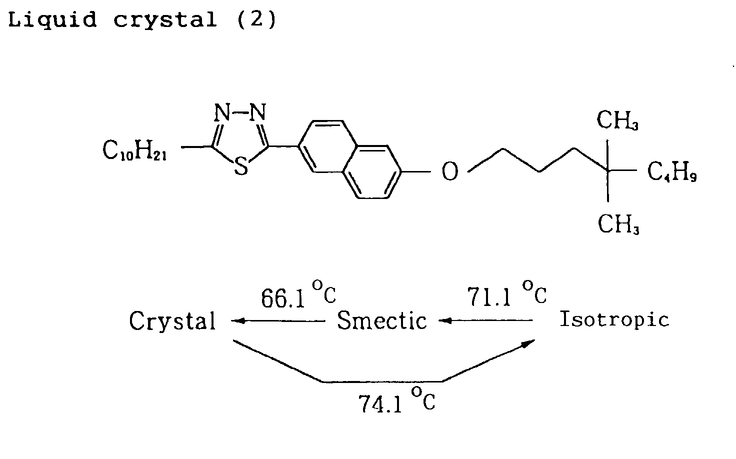

### Comparative Example 1

A blank cell was prepared in the same manner as in Example 1 and was filled with Liquid crystal (5) shown below in isotropic phase, followed by cooling at a rate of 1 °C/min. to room temperature. At a crystal phase temperature (50 °C), a crystal state of non-aligned crystal growth directions was obtained. The non-uniform crystal layer was heated, but when the layer was heated above 66 °C, the entire layer was transformed into smectic phase, so that it was impossible to leave crystal nuclei in the nematic phase. When the layer was gradually cooled at a rate of 0.1 °C/min from the smectic phase (above 66 °C), the resultant crystal state (at 50 °C) was substantially equally non-uniform as the crystal state before the heating.

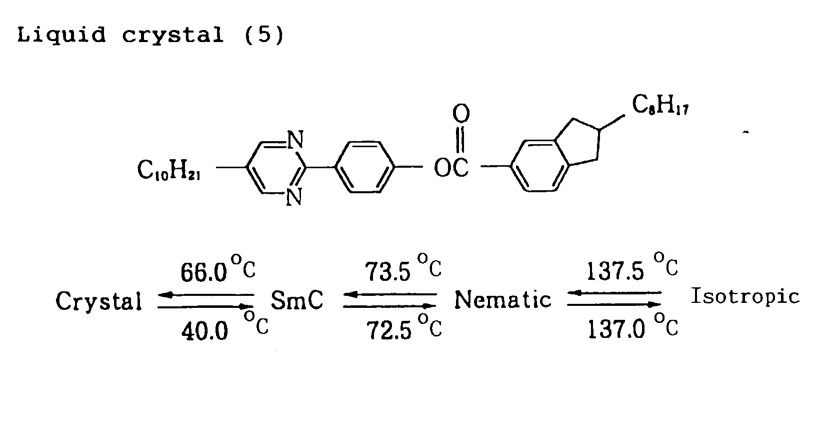

## Claims

1. A process for producing a crystalline film, comprising the steps of:
heating an organic compound in a layer to a vicinity of a critical temperature Tc for phase transition from crystal to isotropic or nematic phase to leave at least one crystal nucleus and place a surrounding region in the isotropic or nematic phase, and
cooling the layer of the organic compound to cause crystal growth of the organic compound from the crystal nucleus as a seed crystal.

2. A process according to claim 1, wherein the crystal growth of the organic compound is performed by cooling the layer of the organic compound between a pair of substrates.

3. A process according to claim 2 wherein the spacing between the substrates is maintained by including spacer means such as beads between the substrates.

4. A process according to claim 1, wherein the organic compound has a bar-shaped molecular structure.

5. A process according to claim 1, wherein the organic compound has a disk-shaped structure.

6. A device incorporating a crystalline film formed according to the process of any one of claims 1 to 5.

7. A device as claimed in claim 6 which is a thin film transistor, an organic electroluminescence device or a temperature sensor.
